# EUROPEAN PATENT APPLICATION

(11) **EP 4 550 846 A1**
(43) Date of publication of application: **07.05.2025**
(21) Application number: 23206968.2
(22) Date of filing: 31.10.2023
(51) Int. Cl.: H04R 25/00, H04R 27/02

(54) **METHOD AND SYSTEM FOR AURACAST BROADCASTING**

(71) Applicant: Sonova AG, 8712 Stäfa (CH)
(72) Inventor: Candela, Mauro, 1785 Cressier (CH); Aparicio, Dominique, 2053 Cernier (CH); Rapin, Michael, 1562 Corcelles-près-Payerne (CH); Desponds, Pascal, 1024 Ecublens VD (CH)
(74) Representative: Schwan Schorer & Partner mbB

(57) **Abstract**

There is provided a method of providing assistive listening to a user (12, 14) of an audio receiver device (10-1, 10-2, 10-3, 10-4), comprising: providing an audio source device (20-1, 20-2) for broadcasting Auracast streams (58-1, 58-2, 58-3, 58-4), the audio receiver device (10-1, 10-2, 10-3, 10-4) for receiving Auracast streams, a Broadcast Assistant device (40-1, 40-2) wirelessly connected with the audio receiver device, and a synchronizer device (30); detecting, by the Broadcast Assistant device, proximity of the Broadcast Assistant device to the synchronizer device, and receiving, by the Broadcast Assistant device via a wireless protocol different from the Bluetooth protocol, information required for identifying the audio source device from the synchronizer device upon detection of proximity to the synchronizer device, retrieving, by the Broadcast Assistant device, via a wireless protocol different from the Bluetooth protocol, synchronization information required for synchronizing the audio receiver device to the audio source device to receive an Auracast stream; synchronizing, by the Broadcast Assistant device, to an Auracast periodic advertising of the audio source device; providing, by the Broadcast Assistant device, the synchronization information to the audio receiver device; and synchronizing the audio receiver device to the audio source device for receiving the Auracast stream from the audio receiver device.

## Description

The invention relates to a method and a system for providing assistive listening to a user of an audio receiver device, such as a student wearing hearing devices in a classroom, configured to receive a broadcast Auracast stream from an audio source device, such as a wireless microphone arrangement used by a teacher in a classroom.

A typical application for assistive listening systems is an educational facility with a plurality of classrooms, with a teacher using a wireless microphone in each classroom for broadcasting the teacher's voice via an audio link, such as Bluetooth LE Audio, to the hearing devices of hearing impaired students in the same classroom.

Auracast is a new technology providing audio broadcasting via Bluetooth Low Energy and may be used in various public locations, including schools. A typical school environment may consist of a wireless microphone Auracast broadcaster worn by the teacher that transmits the teacher's voice to the hearing aids supporting Auracast reception present in the classroom. A major challenge in a school context where several Auracast broadcasters will be present simultaneously is a reliable, simple and automated selection of the specific one to listen to, i.e. the one present in the classroom.

In order to synchronize to an Auracast broadcaster and render its audio stream, an Auracast receiver must first scan for the broadcaster's advertising packets, then perform the periodic advertising synchronization procedure and finally receive the audio stream.

When multiple Auracast broadcasters are in range, a receiver must select the one to listen to, which means scanning for some time for Auracast Broadcasters to collect the related adverting reports and then providing the user with a list of detected devices, from which the user selects the one to synchronize to.

Low power receivers, like hearing aids or earbuds, cannot afford the power consumption associated to the intensive and continuous scanning procedure above; moreover, such devices do not have a GUI (Graphical User Interface) that allows the Broadcaster selection. For these reasons Bluetooth has introduced the Broadcast Assistant, foreseen to be typically implemented by mobile phones, which offloads scanning from power-constrained Auracast receivers and performs the continuous search for Auracast Broadcasters on the receiver's behalf, presenting the user with the list of found devices. Once the user selects one of them, the Broadcast Assistant provides the Auracast receiver with all the necessary information about the selected Auracast Broadcaster using the BASS (Broadcast Audio Scan Service) profile and sends to the Auracast receiver the command to synchronize to the Auracast Broadcaster and start rendering its audio.

The Broadcaster selection from a list of found devices may still not be straightforward: the Broadcast Assistant may show Broadcaster names and their broadcast ID and may order them by decreasing signal strength of the received advertising packets, i.e., trying ordering them by increasing distance, but such ordering may not be reliable and in presence of many Broadcasters rather close to each other the user's choice may anyway be tricky. For these reasons the Bluetooth org has proposed the idea of some QR code to be placed close to each Broadcaster, such that the user may scan it with the Broadcast Assistant on his mobile phone, and retrieve the necessary information to synchronize to the associated Broadcaster.

The use of Auracast Broadcasters in a school context may face several problems. For example, mobile phones of the students are not always welcome or even allowed in schools. Further, even with a Broadcast Assistant implemented on a dedicated device other than a mobile phone, children at low age cannot manage the complexity of broadcaster search and selection, while teachers cannot waste time at the beginning of every lesson to perform this task for all their hearing impaired students. The idea of using a QR code is vague and left to the implementation and anyway would require the user to perform actions that for children may be too complex, and things get even more complicated in case of several teachers managing independent groups within the same classroom. On the other hand, using a Broadcast Assistant on a school's phone worn by the teacher may run into various technical issues and privacy concerns due to the requirement of pairing between the Broadcast Assistant and the hearing aids (Scan Delegators): the teacher's phone needs to be paired with each and every Auracast hearing aid and each Auracast hearing aid needs to be paired with each teacher's phone, which may end-up using all available pairing entries and override some of them. Moreover, the teacher's phone must keep during the entire lesson a BLE connection with each Auracast hearing aid currently synchronized in order to monitor its status and properly react to potential link losses; this brings feasibility and reliability concerns because the phone must also remain synchronized to the Auracast Broadcaster's periodic advertising and must even keep scanning for students that may arrive later or come back into the classroom after going out for a short while.

EP 4 184 951 A1 relates to a Bluetooth LE Audio system wherein a broadcast source of interest is identified by using proximity detection between a broadcast designator device and a broadcast receiver device or proximity detection between a broadcast designator device and a delegate device associated with a broadcast receiver device and by advertising the broadcast designation information.

US 2018/0124527 A1 relates to a method of providing hearing assistance wherein upon registration for an event, like a concert or movie, the user of a hearing aid system receives on his mobile phone a stream access code that will allow the user to synchronize the user's hearing aids to the corresponding audio broadcaster.

US 2018/0124526 A1 relates to a method to select an audio stream by incorporating in the audio itself some metadata that are also communicated to hearing aids directly or indirectly by a separate device.

CN 116032402 A relates to a system wherein an Auracast receiver device scans for all Auracast broadcast devices in range, synchronizes to each of them and obtain a touch operation instruction (one per broadcast device) that the user has to perform in order to select the associated source.

WO 2014/094877 A1 relates to an assistive listening system utilizing a proprietary wireless protocol wherein two wireless devices of the system may pair upon user operation of a switch when the two devices are in close proximity to each other, in particular within 1 m.

US 8,543,709 B2 relates to an assistive listening system to be used, for example, at schools, wherein the wireless devices may be configured by a control unit to dynamically form groups of connected devices.

US 2018/0124526 A1 relates to an assistive listening system comprising a plurality of audio streaming devices located e.g. in different rooms of a venue, such as a movie theater, which may use a modified Bluetooth LE protocol for audio streaming to hearing devices of persons attending the venue. The configuration data required for connecting to a respective stream, such as a link key, may be provided to the hearing devices by a short range link using a different protocol from a device located e.g. at the entrance of the room. The configuration data also may be provided via a mobile phone to the hearing devices.

It is an object of the invention to provide for a method and a system for providing assistive listening to a user of an audio receiver device configured to receive a broadcast Auracast stream from an Auracast audio source device, which allows for reliable detection of and an automated and seamless synchronization to the Auracast audio source device.

According to the invention, this object is achieved by a method as defined in claim 1 and a system as defined in claim 13.

The solution defined in claims 1 and 13 is beneficial in that, by using a wireless protocol different from Bluetooth for proximity detection and reception of information required for identifying the desired Auracast Broadcast device, reliable and automated selection of the correct Auracast Broadcast device can be achieved, without the need for any user action other than approaching the synchronizer device. This is particularly helpful for applications at schools or other educational facilities, or also at conference or other meeting facilities, or at entertainment facilities, where the synchronizer device may be placed at the entrance of the class room or meeting room, so that the Broadcast Assistant device can identify the correct Auracast Broadcast device when the user of the Auracast receiver device enters the room. Thus, inadvertent synchronization to another Auracast Broadcast device simultaneously in range, which is located in an adjacent room or potentially even in the same room in case of e.g. co-teaching person, is avoided. Further, potential privacy issues arising from Bluetooth LE pairing of the Auracast receiver device with devices other than the user's own Broadcast Assistant such as a teacher's mobile phone, can be avoided.

Preferred embodiments of the invention are defined in the dependent claims.

According to one example, the Broadcast Assistant device instructs the audio receiver device to synchronize to the audio source device and to render the Auracast stream broadcasted by the audio source device. In particular, the Broadcast Assistant device may be wirelessly connected with the audio receiver device via Bluetooth LE, wherein the Broadcast Assistant device may use the standard BASS profile to provide the information required for Auracast synchronizing of the audio receiver device to the audio source device to the audio receiver device and to send commands to the audio receiver device to synchronize to the audio source device and to render the Auracast stream broadcasted by the audio source device.

According to one example, the Broadcast Assistant device retrieves the information required for Auracast synchronizing the audio receiver device to the audio source device from the audio source device. In particular, the wireless protocol different from the Bluetooth protocol used by the Broadcast Assistant device for retrieving said information required for Auracast synchronizing from the audio source device may equal the wireless protocol used by the synchronizer device for transmitting said information required for identifying the audio source device. Alternatively, the wireless protocol different from the Bluetooth protocol used by the Broadcast Assistant device for retrieving the information required for Auracast synchronizing from the audio source device may be different from the wireless protocol used by the synchronizer device for transmitting said information required for identifying the audio source device.

According to one example, the Broadcast Assistant device retrieves the information required for Auracast synchronizing of the audio receiver device to the audio source device from the synchronizer device via said wireless protocol used by the synchronizer device for transmitting said information required for identifying the audio source device. Alternatively, the Broadcast Assistant device may retrieve the information required for Auracast synchronizing of the audio receiver device to the audio source device from the synchronizer device via a further wireless protocol different from the wireless protocol by the synchronizer device for transmitting said information required for identifying the audio source device.

According to one example, proximity is detected when the strength of the wireless signal from the synchronizer device, as measured by the Broadcast Assistant device, is found to be above a given threshold value.

According to one example, the wireless protocol used by the synchronizer device for transmitting said information required for identifying the audio source device is a proprietary protocol.

According to one example, the method of claim 1 further comprises:
providing a second audio source device for broadcasting a second Auracast stream;
bringing the second audio source device in proximity to the Broadcast Assistant device and starting signal transmission, by the second audio source device via a wireless protocol different from the Bluetooth protocol;
detecting, by the Broadcast Assistant device, proximity of the Broadcast Assistant device to the second audio source device from said signal transmission, and receiving upon detection of proximity to the second audio source device, by the Broadcast Assistant device from the second audio source device via said wireless protocol different from the Bluetooth protocol, information required for synchronizing to the second audio source device to receive the second Auracast stream;
synchronizing, by the Broadcast Assistant device, to an Auracast periodic advertising of the second audio source device;
providing, by the Broadcast Assistant device, the information required for Auracast synchronizing to the second audio source device to the audio receiver device; and
stopping synchronization of the audio receiver device to the audio source device and synchronizing the audio receiver device to the second audio source device for receiving an Auracast stream from the second audio source device.

This example is beneficial in that, by using a wireless protocol different from Bluetooth for proximity detection and reception of information required for identifying the desired Auracast Broadcast device, reliable and automated selection of the correct Auracast Broadcast device can be achieved, without the need for any user action other than once bringing the Broadcast Assistant device and desired Auracast Broadcast device close together. This allows, for example, in a school context, to easily establish sub-groups of students listening to one out of several teachers in the classroom by approaching the Broadcast Assistant devices of those students who should listen to that teacher; for achieving a particularly reliable process, the teacher may trigger the synchronization procedure, for example, by pressing a button, once proximity has been established.

According to one example, the Broadcast Assistant device synchronizes to the Auracast periodic advertising of the audio source device before the audio receiver device synchronizes to audio source device, and wherein the Broadcast Assistant device, before the Broadcast Assistant device synchronizes to the Auracast periodic advertising of the second audio receiver device, stops synchronizing to the audio source device and synchronizes to the Auracast periodic advertising of the second audio source device.

According to one example, the Broadcast Assistant device is wirelessly connected with the audio receiver device via Bluetooth LE, and wherein the Broadcast Assistant device uses the standard BASS profile to provide the synchronization information required for Auracast synchronizing to the second audio source device and to send commands to the audio receiver device to stop synchronization of the audio receiver device to the audio source device and to synchronize to the second audio source device and to render the Auracast stream broadcasted by the second audio source device.

According to one example, the second audio source device comprises a user interface, such as a button, for starting signal transmission by the second audio device via said wireless protocol different from the Bluetooth protocol.

According to one example, upon proximity detection, the Broadcast Assistant device and the second audio source device establish a wireless link utilizing the dedicated wireless protocol.

According to one example, the assistive listening system of claim 13 further comprises:
a second audio source device for broadcasting a second Auracast stream,
wherein the second audio source device is operable to transmit, to the Broadcast Assistant device when in proximity to the second audio source device, via a wireless protocol different from the Bluetooth protocol, information required for synchronizing to the second audio source device to receive the second Auracast stream,
wherein the Broadcast Assistant device is configured
   to detect proximity of the Broadcast Assistant device to the second audio source device and to receive upon detection of proximity to the second audio source device, via said wireless protocol different from the Bluetooth protocol, information required for Auracast synchronizing to the second audio source device from the second audio source device,
   to synchronize to an Auracast periodic advertising of the second audio source device, and
   to provide the information required for Auracast synchronizing of the audio receiver device to the second audio source device to the audio receiver device,
wherein the audio receiver device is configured to stop synchronization to the audio source device and synchronize, by using the synchronization information received from the Broadcast Assistant device, to the second audio source device for receiving the second Auracast stream from the second audio source device.

According to one example, the audio source device(s) and the Broadcast assistant device are devices utilizing the same hardware and the same software with a user interface allowing to select operation either as an audio source device or as a Broadcast Assistant device.

According to one example, the audio source device(s) comprise(s) a microphone arrangement for capturing a speaker's voice.

Hereinafter, examples of the invention will be illustrated by reference to the attached drawings, wherein:
Figs. 1 and 2 are a schematic illustration of an example of how Auracast hearing devices of students can be automatically synchronized to an Auracast Broadcast device of a teacher;
Figs. 3A-E are schematic illustrations of individual steps of the automatic synchronization process utilized in the example Figs. 1 and 2; and
Figs. 4-6 are a schematic illustration of an example of how Auracast hearing devices of a student originally synchronized to a first Auracast Broadcast device used by a first teacher can be synchronized to a second Auracast Broadcast device used by a second teacher instead.

An "Auracast Broadcast device" as used hereinafter is a device implementing the Public Broadcast Source (PBP) role as defined in the Bluetooth Public Broadcast Profile specification and therefore acting as an Auracast audio source. In particular, the device may comprises a microphone arrangement for capturing a person's voice, such as a teacher utilizing the device as a wireless microphone in a classroom.

An "Auracast receiver device" as used hereinafter is a device implementing the Public Broadcast Sink (PBS) role as defined in the Bluetooth Public Broadcast Profile specification and therefore acting as an audio receiver device for receiving an Auracast broadcast stream from an Auracast Broadcast device. Additionally it implements the Scan Delegator role as defined in the Bluetooth Basic Audio Profile specification. For example, the Auracast receiver device may be implemented as a hearing device, such as a hearing aid, which is worn by student in a classroom. Typically, the Auracast Broadcast device may form part of a binaural system, i.e., it may form a pair with another Auracast Broadcast device.

A "hearing device" as used hereinafter is any ear level element suitable for reproducing sound by stimulating a user's hearing, such as an electroacoustic hearing aid, a bone conduction hearing aid, an active hearing protection device, a hearing prostheses element such as a cochlear implant, a wireless headset, an earbud, an earplug, an earphone, etc.

A "Broadcast Assistant device" as used hereinafter is a device that implements the Public Broadcast Assistant (PBA) role as defined in the Bluetooth Public Broadcast Profile specification. The Broadcast Assistant device may include a microphone arrangement for capturing a person's voice. In particular, the Broadcast Assistant device may even have the same hardware and software as the Auracast Broadcast device, in which case the user may determine, by mode selection, whether the device should operate in an Auracast Broadcast mode or in a Broadcast Assistant mode, with these two modes being mutually exclusive.

A "wireless protocol different from the Bluetooth protocol" or a "wireless protocol different from Bluetooth" as used hereinafter is a wireless protocol that is different from any version of the Bluetooth protocol.

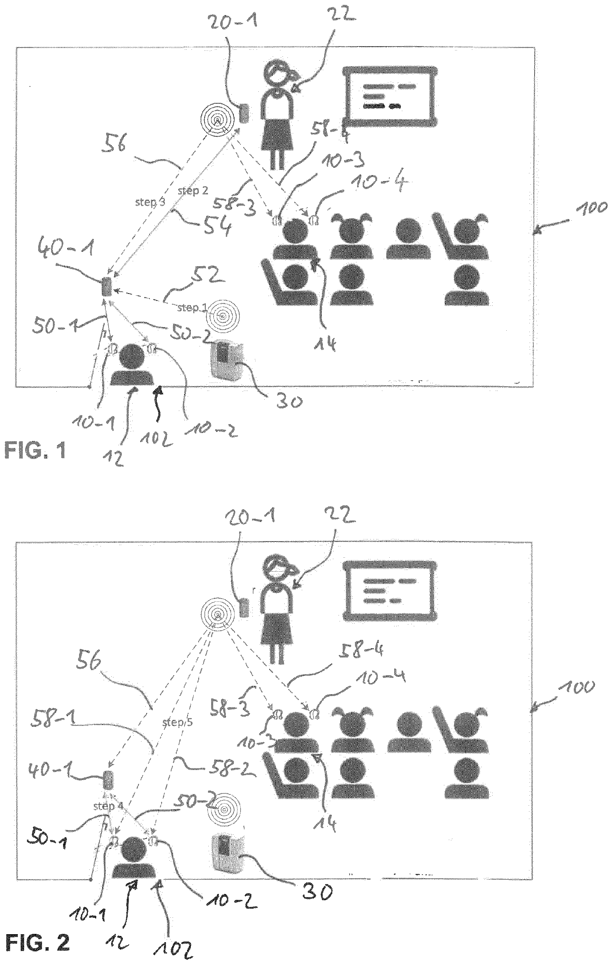

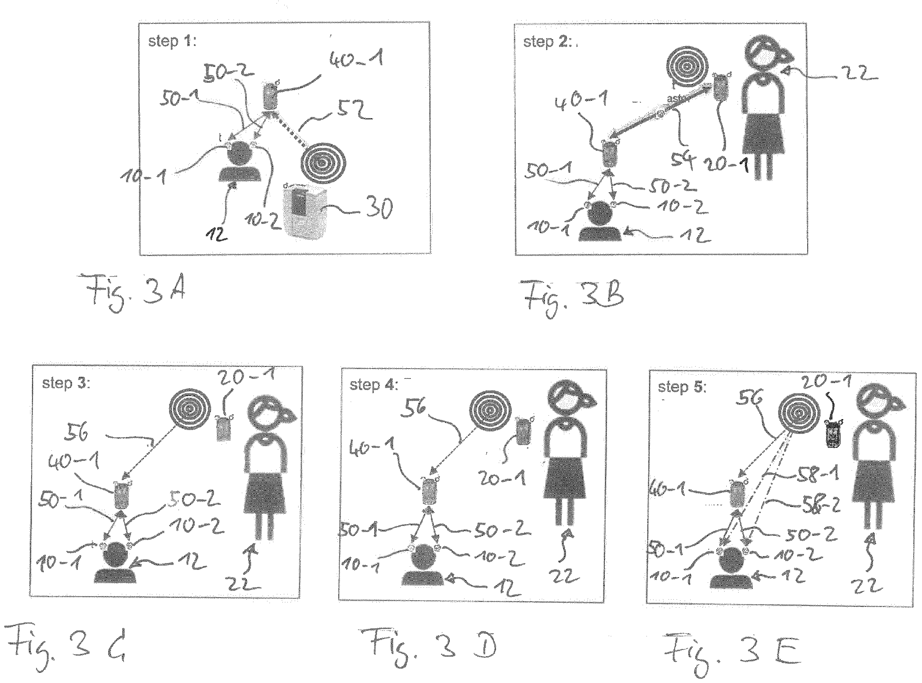

Figs. 1 and 2 are a schematic illustration of an example of how hearing devices 10-1, 10-2, such as hearing aids, of a student 12 capable of receiving Auracast broadcast streams can be automatically synchronized to an Auracast Broadcast device (hereinafter also referred to as "audio source device") 20-1 of a teacher 22 by utilizing a synchronizer device 30 and a Broadcast Assistant device 40-1 of the student 12. The automatic synchronization process of the example of Figs. 1 and 2 includes five steps which are illustrated in Figs. 3A-E.

The Broadcast Assistant device 40-1 of the student 12 is wirelessly connected to each of the Auracast hearing devices 10-1, 10-2 (hereinafter also referred to as "Auracast receiver devices" or "audio receiver devices") of the student 12 via a Bluetooth LE link 50-1, 50-2. The Broadcast Assistant device 40-1 is a personal accessory device which is worn or carried by the student 12 when entering a classroom 100.

The synchronizer device 30 may be placed at an entrance 102 of the classroom 100 so that the Broadcast Assistant device 40-1 would come close (e.g., closer than 1 m) to the synchronizer device 30 when the student 12 enters the classroom 100.

The synchronizer device 30 broadcasts, utilizing a dedicated wireless protocol different from any version of the Bluetooth protocol, information required for identifying the Auracast Broadcast device 20-1 (from a plurality of other Auracast Broadcast devices). In particular, the synchronizer device 30 may broadcast data which allows the Broadcast Assistant device 40-1 to synchronize with the Auracast Broadcast device 20-1 via said dedicated wireless protocol, with dedicated wireless protocol being utilized by the Auracast Broadcast device 20-1 in addition to Auracast.

When the teacher carrying the Auracast Broadcast device 20-1 enters the classroom 100, the Auracast Broadcast device 20-1, using the dedicated wireless protocol, detects proximity to the synchronizer device 30 and thereupon synchronizes to the synchronizer device 30 via the dedicated wireless protocol.

In a first step (see in particular Fig. 3A), the Broadcast Assistant device 40-1 performs proximity detection to the synchronizer device 30, for example by measuring the strength of the received broadcast signal 52 from the synchronizer device 30, and accepts the received signal, for example, if the estimated distance is below a given threshold, such as 1 m. Detailed examples for proximity detection based in received signal strength can be found, for example, in WO 2014/094877 A1.

In a second step (see in particular Fig. 3B), the Broadcast Assistant device 40-1, after having detected proximity of the synchronizer device 30, uses the received synchronization data to establish a communication link 54 utilizing the dedicated wireless protocol and to receive synchronization data from the Auracast Broadcast device 20-1 which allows to synchronize to the Auracast stream broadcasted by the Auracast Broadcast device 20-1. Such Auracast synchronization data includes, for example, the Auracast broadcast ID of the Auracast Broadcast device 20-1; it also may include encryption/decryption information, the Auracast Broadcast's advertiser address, its periodic advertising interval, the number of sub-groups and any other parameter useful for the subsequent synchronization of the Auracast receiver devices.

In a third step (see in particular Fig. 3C), the Broadcast Assistant device 40-1 uses the synchronization data obtained from the Auracast Broadcast device 20-1 via the link 54 to synchronize to the Auracast periodic advertising of the Auracast Broadcast device 20-1 (indicated at 56).

In a fourth step (see in particular Fig. 3D), the Broadcast Assistant device 40-1 uses the Bluetooth BASS (Broadcast Audio Scan Service) profile to transmit the synchronization data, obtained from the Auracast Broadcast device 20-1 and from the synchronization to the Periodic Advertising of the Auracast Broadcast device 20-1, to the Auracast receiver devices 10-1 and 10-2 via the Bluetooth LE connection 50-1, 50-2 and to instruct the Auracast receiver devices 10-1 and 10-2 to synchronize to the Auracast Broadcast device 20-1 so that the Auracast receiver devices 10-1 and 10-2 are enabled to receive an Auracast broadcast stream 58-1 and 58-2 from the Auracast Broadcast device 20-1. It is noted that the synchronization of the Broadcast Assistant device 40-1 to the periodic advertising of the Auracast Broadcast device 20-1 provides the Broadcast Assistant device 40-1 with the low level timing used by the PAST (Periodic Advertising Synchronization Transfer) procedure, which is an optimized method for synchronization of the Auracast receiver devices. The synchronization to the periodic advertising also enables the Broadcast Assistant device 40-1 to know whether the Auracast Broadcast device is present and is transmitting audio (otherwise it does not make sense to instruct the Auracast receiver devices to synchronize to the Auracast Broadcast device).

In a fifth step (see in particular Fig. 3E), the Auracast receiver devices 10-1 and 10-2 receive the Auracast broadcast stream 58-1 and 58-2 from the Auracast Broadcast device 20-1 and render the audio signal contained therein to the student 12 so that the student 12 can listen to the teacher 22 via the Auracast receiver devices 10-1 and 10-2.

In the example discussed so far, the Auracast Broadcast device 20-1 and the Broadcast Assistant device 40-1 are able to use both the Auracast protocol and the dedicated wireless protocol different from Bluetooth which is used by synchronizer device. The Auracast receiver devices 10-1 and 10-2 only need to use the Auracast protocol (and Bluetooth LE for connecting with the Broadcast Assistant device 40-1).

The above exemplary process may be used to synchronize the Auracast receiver devices / hearing devices of a plurality of students assembling in the classroom 100 to the Auracast Broadcast device (or Auracast transmitter) 20-1 of the teacher 22, with each student having his/her own Broadcast Assistant device connected via Bluetooth LE to his/her Auracast hearing devices.

According to one example, the dedicated wireless protocol may be a proprietary protocol which is suitable for audio broadcasting, so that the Auracast Broadcast device 20-1 could be used not only with Auracast receiver devices but in addition also with audio receiver devices utilizing said dedicated wireless protocol only, so as to achieve compatibility with different types of receiver devices.

In this case the audio receiver devices utilizing the dedicated wireless protocol would receive the data required for synchronization to audio broadcast from the synchronizer device 30 utilizing the dedicated wireless protocol; i.e., the Auracast Broadcast device 20-1 in this case would provide an audio stream utilizing the dedicated wireless protocol to be received by the dedicated wireless protocol audio receiver devices in addition to the Auracast audio stream to be received by the Auracast receiver devices 10-1, 10-2.

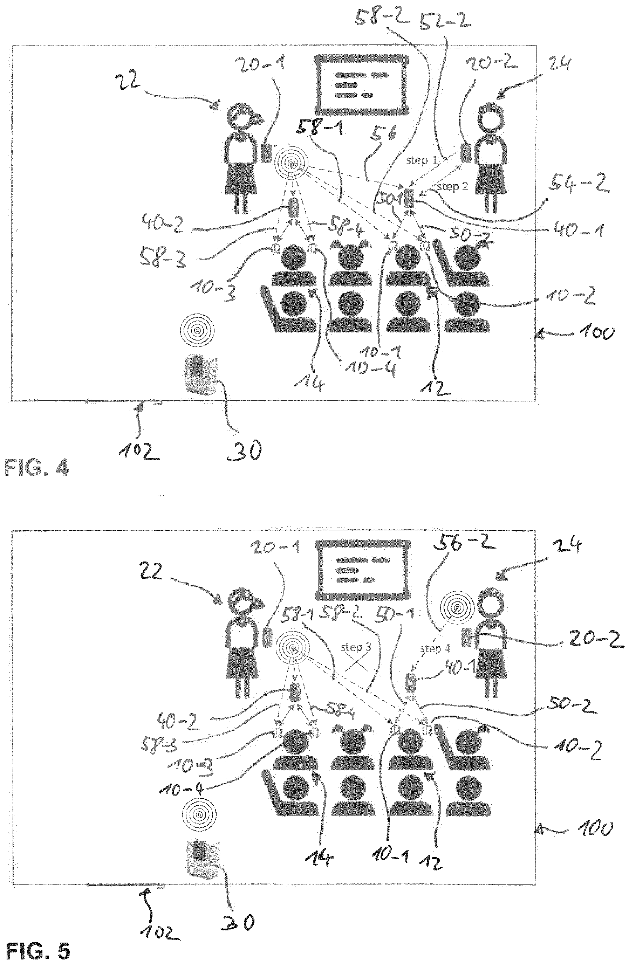

Figs. 4 to 6 provide for a schematic illustration of an example of how Auracast hearing devices 10-1, 10-2 of a student 12, after having synchronized been to a first Auracast Broadcast device 20-1 used by a first teacher 22, can be synchronized to a second Auracast Broadcast device 20-2 used by a second teacher 24 instead.

Fig. 4 illustrates the starting situation in which the Auracast hearing devices 10-1, 10-2 and the Broadcast Assistant device 40-1 of the student 12 and the Auracast hearing devices 10-3, 10-4 and the Broadcast Assistant device 40-2 of another student 14 are synchronized to the first Auracast Broadcast device 20-1 used by the first teacher 22 so that the hearing devices 10-1 to 10-4 can receive and render an Auracast audio stream 58-1 to 58-4 from the Auracast Broadcast device 20-1. In addition to the Auracast stream each Auracast Broadcast device 20-1, 20-2 also broadcasts data 52-1, 52-2 for synchronizing to the respective Auracast Broadcast device 20-1 and 20-2 via the dedicated wireless protocol different from Bluetooth.

In a first step (see Fig. 4) of an example of a process to synchronize the Auracast hearing devices 10-1, 10-2 of the student 12 to the second Auracast Broadcast device 20-2 used by the second teacher 24 rather than to the first Auracast Broadcast device 20-1 used by the first teacher 22, the second teacher 24 brings his/her second Auracast Broadcast device 20-2 close to the Broadcast Assistant device 40-1 of the student 12, for example closer than 10cm, and starts a synchronization procedure utilizing the dedicated wireless protocol, for example by pressing a button on his/her Auracast Broadcast device 20-2, whereupon the second Auracast Broadcast device 20-2 starts to transmit a broadcast signal which allows the Broadcast Assistant device 40-1 to detect proximity to the second Auracast Broadcast device 20-2, e.g. by measuring the strength of the received broadcast signal 52-2 from the second Auracast Broadcast device 20-2 and determine that the distance between the two devices is, for example, less than 10 cm. After such detection the Broadcast Assistant device 40-1 may send a response to the received broadcast signal, whereupon the second Auracast Broadcast device 20-2 may stop the broadcast transmission and start a unicast communication of synchronization information with the answering Broadcast Assistant device 40-1, which then accepts the synchronization information and can therefore synchronize to the second Auracast Broadcast device 20-2, so as to establish a communication link 54-2 utilizing the dedicated wireless protocol.

In a second step (see Fig. 4) the Broadcast Assistant device 40-1 receives via the communication link 54-2 synchronization data from the second Auracast Broadcast device 20-2 which allows to synchronize to an Auracast stream broadcasted by the second Auracast Broadcast device 20-2.

In a third step (see Fig. 5) the Broadcast Assistant device 40-1 of the student 12 stops synchronization to the first Auracast Broadcast device 20-1.

In fourth step (see Fig. 5) the Broadcast Assistant device 40-1 of the student 12 synchronizes to the second Auracast Broadcast device 20-2 (indicated at 56-2 in Fig. 5).

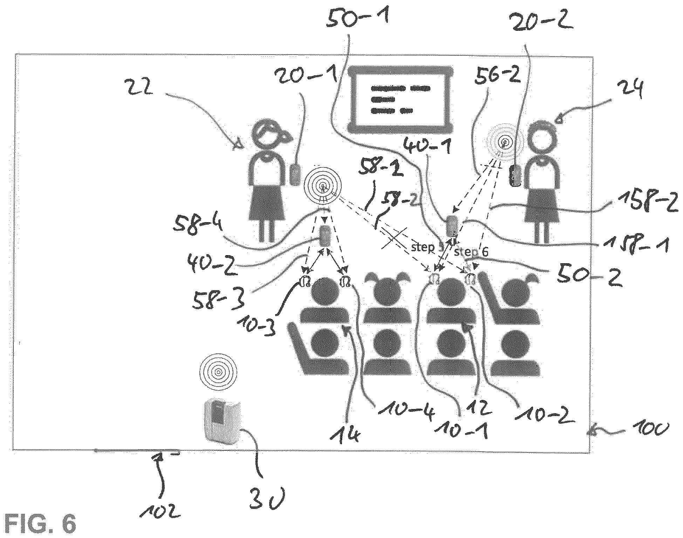

In a fifth step (see Fig. 6) the Broadcast Assistant device 40-1 uses the Bluetooth BASS profile to instruct the Auracast receiver devices 10-1 and 10-2 via the Bluetooth LE connection 50-1, 50-2 to stop synchronization to the Auracast streams 58-1 and 58-2, respectively.

In a sixth step (see Fig. 6) the Broadcast Assistant device 40-1 uses the Bluetooth BASS profile to transmit the synchronization data, obtained from the second Auracast Broadcast device 20-2 and from the synchronization to the periodic advertising, to the Auracast receiver devices 10-1 and 10-2 via the Bluetooth LE connection 50-1, 50-2 and to instruct the Auracast receiver devices 10-1 and 10-2 to synchronize to the second Auracast Broadcast device 20-2, so that the Auracast receiver devices 10-1 and 10-2 are enabled to receive an Auracast broadcast stream 158-1 and 158-2 from the second Auracast Broadcast device 20-2, and to render the audio signal contained therein to the student 12. Thus, the student 12 can listen now to the second teacher 24 via the Auracast receiver devices 10-1 and 10-2 and the second Auracast Broadcast device 20-2, rather than to the first teacher 22.

It is to be noted that the other student 14 continues to listen to the first teacher 22 via the Auracast stream 58-1, 58-2 received from the first Auracast Broadcast device 20-1.

Such synchronization change to the desired Auracast Broadcast device initiated by proximity of the Broadcast Assistant device 40-1 to the desired Auracast Broadcast device can be used to establish a sub-group of students listening to one of the Auracast Broadcast devices used by one of the teachers while another subgroup of students listens to another one of the Auracast Broadcast devices used by another one of the teachers.

Many variations of the examples illustrated so far are possible.

It is noted that the communication connection established between the Broadcast Assistant device and the Auracast Broadcast device via the dedicated wireless protocol may be used by the Broadcast Assistant device not only for retrieval of the Auracast synchronization information but it also could be used by the Broadcast Assistant device to send messages to the Auracast Broadcast device, for example, to communicate that the Auracast receiver device associated with the Broadcast Assistant device has lost synchronization to Auracast Broadcast device, so that Auracast Broadcast device, for example, could alert the teacher of such loss.

Further, while in the example illustrated above in Figs. 1-3 the Broadcast Assistant device 40-1 retrieves the Auracast synchronization data from the Auracast Broadcast device 20-1, the Broadcast Assistant device 40-1 may retrieve the Auracast synchronization data directly from the synchronizer device 30 via the broadcast signal 52 utilizing the dedicated wireless protocol. While thereby the communication between the Broadcast Assistant device 40-1 and the Auracast Broadcast device 20-1 via the dedicated wireless protocol could be avoided, this would require the synchronizer device 30 to interleave the Auracast synchronization data with the dedicated wireless protocol synchronization data which are to be provided to audio receiver devices which are not compatible with Auracast but rather utilize the dedicated wireless protocol for audio broadcast reception.

According to another alternative example, two different dedicated protocols, which both are different from Bluetooth, could be used, a first one for proximity detection and a second one for retrieval of the Auracast synchronization information from the Auracast Broadcast device of the synchronizer device.

As already mentioned above, the Broadcast Assistant devices and the Auracast Broadcast device may be implemented as dual mode devices, having the same hardware and software as the, with the user determining, by mode selection, whether the device should operate in an Auracast Broadcast mode or in a Broadcast Assistant mode, with these two modes being mutually exclusive.

According to another example, the Auracast Broadcast device and the Broadcast Assistant device may be implemented using the same hardware but a different software.

According to still another example, the Auracast Broadcast device and the Broadcast Assistant device may be implemented using a different hardware and a different software, where the Broadcast Assistant device may be, for example, smaller and lighter as the Auracast Broadcast device with a smaller display for the purpose of pairing with the Auracast receiver devices, or even no display at all. This is due to the fact the Broadcast Assistant device may be worn by students potentially of low age, so that does actually not really need a GUI (graphical user interface), except during the pairing phase. In particular, the Broadcast Assistant device may have the design of a remote control device which, for example, may be for being worn around the neck or in a pocket or with the keys, etc.

## Claims

1. A method of providing assistive listening to a user (12, 14) of an audio receiver device (10-1, 10-2, 10-3, 10-4), the method comprising:
providing an audio source device (20-1, 20-2) for broadcasting Auracast streams (58-1, 58-2, 58-3, 58-4), the audio receiver device (10-1, 10-2, 10-3, 10-4) for receiving Auracast streams, a Broadcast Assistant device (40-1, 40-2) wirelessly connected with the audio receiver device, and a synchronizer device (30);
detecting, by the Broadcast Assistant device, proximity of the Broadcast Assistant device to the synchronizer device, and receiving, by the Broadcast Assistant device via a wireless protocol different from the Bluetooth protocol, information required for identifying the audio source device from the synchronizer device upon detection of proximity to the synchronizer device;
retrieving, by the Broadcast Assistant device, via a wireless protocol different from the Bluetooth protocol, synchronization information required for synchronizing the audio receiver device to the audio source device to receive an Auracast stream;
synchronizing, by the Broadcast Assistant device, to an Auracast periodic advertising of the audio source device;
providing, by the Broadcast Assistant device, the synchronization information to the audio receiver device; and
synchronizing the audio receiver device to the audio source device for receiving the Auracast stream from the audio receiver device.

2. The method of claim 1, wherein the Broadcast Assistant device (40-1, 40-2) instructs the audio receiver device (10-1, 10-2, 10-3, 10-4) to synchronize to the audio source device and to render the Auracast stream (58-1, 58-2, 58-3, 58-4) broadcasted by the audio source device.

3. The method of claim 2, wherein the Broadcast Assistant device (40-1, 40-2) is wirelessly connected with the audio receiver device (10-1, 10-2, 10-3, 10-4) via Bluetooth LE, and wherein the Broadcast Assistant device uses the standard BASS profile to provide the information required for Auracast synchronizing of the audio receiver device to the audio source device (20-1, 20-2) to the audio receiver device and to send commands to the audio receiver device to synchronize to the audio source device and to render the Auracast stream (58-1, 58-2, 58-3, 58-4) broadcasted by the audio source device.

4. The method of one of the preceding claims, wherein the Broadcast Assistant device (40-1, 40-2) retrieves the information required for Auracast synchronizing the audio receiver device (10-1, 10-2, 10-3, 10-4) to the audio source device (20-1, 20-2) from the audio source device.

5. The method of claim 4, wherein the wireless protocol different from the Bluetooth protocol used by the Broadcast Assistant device (40-1 , 40-2) for retrieving said information required for Auracast synchronizing from the audio source device (20-1, 20-2) equals the wireless protocol used by the synchronizer device (30) for transmitting said information required for identifying the audio source device.

6. The method of one of the preceding claims, wherein proximity is detected when the strength of the wireless signal from the synchronizer device (30), as measured by the Broadcast Assistant device (40-1, 40-2), is found to be above a given threshold value.

7. The method of one of the preceding claims, wherein said wireless protocol used by the synchronizer device (30) for transmitting said information required for identifying the audio source device (20-1, 20-2) is a proprietary protocol.

8. The method of claim 1, further comprising:
providing a second audio source device (20-2) for broadcasting a second Auracast stream (158-1, 158-2)
bringing the second audio source device in proximity to the Broadcast Assistant device and starting signal transmission, by the second audio source device via a wireless protocol different from the Bluetooth protocol,
detecting, by the Broadcast Assistant device, proximity of the Broadcast Assistant device to the second audio source device from said signal transmission, and receiving upon detection of proximity to the second audio source device, by the Broadcast Assistant device from the second audio source device via said wireless protocol different from the Bluetooth protocol, information required for synchronizing to the second audio source device to receive the second Auracast stream,
synchronizing, by the Broadcast Assistant device, to an Auracast periodic advertising of the second audio source device,
providing, by the Broadcast Assistant device, the information required for Auracast synchronizing to the second audio source device to the audio receiver device, and
stopping synchronization of the audio receiver device to the audio source device and synchronizing the audio receiver device to the second audio source device for receiving an Auracast stream from the second audio source device.

9. The method of claim 8, wherein the Broadcast Assistant device (40-1, 40-2) synchronizes to the Auracast periodic advertising of the audio source device (20-1) before the audio receiver device (10-1, 10-2, 10-3, 10-4) synchronizes to first audio source device, and wherein the Broadcast Assistant device, before the Broadcast Assistant device synchronizes to the Auracast periodic advertising of the second audio receiver device, stops synchronizing to the audio source device and synchronizes to the Auracast periodic advertising of the second audio source device (20-2).

10. The method of one of claims 8 and 9, wherein the Broadcast Assistant device (40-1, 40-2) is wirelessly connected with the audio receiver device (10-1, 10-2, 10-3, 10-4) via Bluetooth LE, and wherein the Broadcast Assistant device uses the standard BASS profile to provide the synchronization information required for Auracast synchronizing to the second audio source device (20-2) and to send commands to the audio receiver device to stop synchronization of the audio receiver device to the audio source device (20-1) and to synchronize to the second audio source device and to render the Auracast stream (158-1, 158-2) broadcasted by the second audio source device.

11. The method of one of claims 8 to 9, wherein the second audio source device (20-2) comprises a user interface, such as a button, for starting signal transmission by the second audio device via said wireless protocol different from the Bluetooth protocol.

12. The method of one of claims 8 to 11, wherein, upon proximity detection, the Broadcast Assistant device (40-1, 40-2) and the second audio source device (20-2) establish a wireless link (56-2) utilizing the dedicated wireless protocol.

13. An assistive listening system comprising:
an audio source device (20-1, 20-2) for broadcasting Auracast streams (58-1, 58-2, 58-3, 58-4);
an audio receiver device (10-1, 10-2, 10-3, 10-4) for receiving broadcast Auracast streams;
a Broadcast Assistant device (40-1, 40-2) configured to wirelessly connect with the audio receiver device; and
a synchronizer device (30) configured to broadcast, utilizing a wireless protocol different from the Bluetooth protocol, information required for identifying the audio source device to the Broadcast Assistant device;
wherein the Broadcast Assistant device is configured
to detect proximity of the Broadcast Assistant device to the synchronizer device, and to receive, via said wireless protocol different from the Bluetooth protocol, said information required for identifying the audio source device from the synchronizer device upon detection of proximity to the synchronizer device,
to retrieve, via a wireless protocol different from the Bluetooth protocol, information required for synchronizing the audio receiver device to the audio source device to receive an Auracast stream,
to synchronize to an Auracast periodic advertising of the audio source device, and
to provide the information required for Auracast synchronizing of the audio receiver device to the audio source device to the audio receiver device; and
wherein the audio receiver device is configured to synchronize, by using the synchronization information received from the Broadcast Assistant device, to the audio source device for receiving the Auracast stream from the audio receiver device.

14. The assistive listening system of claim 13, further comprising:
a second audio source device (20-2) for broadcasting a second Auracast stream (158-1, 158-2),
wherein the second audio source device is operable to transmit, to the Broadcast Assistant device when in proximity to the second audio source device, via a wireless protocol different from the Bluetooth protocol, information required for synchronizing to the second audio source device to receive the second Auracast stream,
wherein the Broadcast Assistant device is configured
to detect proximity of the Broadcast Assistant device to the second audio source device and to receive upon detection of proximity to the second audio source device, via said wireless protocol different from the Bluetooth protocol, information required for Auracast synchronizing to the second audio source device from the second audio source device,
to synchronize to an Auracast periodic advertising of the second audio source device, and
to provide the information required for Auracast synchronizing of the audio receiver device to the second audio source device to the audio receiver device,
wherein the audio receiver device is configured to stop synchronization to the audio source device and synchronize, by using the synchronization information received from the Broadcast Assistant device, to the second audio source device for receiving the second Auracast stream (158-1, 158-2) from the second audio source device.

15. The system of one claims 13 and 14, wherein the audio source device(s) (20-1, 20-2) and the Broadcast assistant device (40-1, 40-2) are devices utilizing the same hardware and the same software with a user interface allowing to select operation either as an audio source device or as a Broadcast Assistant device.
